# NEUE EUROPÄISCHE PATENTSCHRIFT

(11) **EP 0 334 387 B2**
(45) Veröffentlichungstag und Bekanntmachung des Hinweises auf die Entscheidung über den Einspruch: **25.01.1995**
(45) Hinweis auf die Patenterteilung: 02.09.1992
(21) Anmeldenummer: 89105441.3
(22) Anmeldetag: 28.03.1989
(51) Int. Cl.: B62D 27/06, B62D 33/02

(54) **Befestigungseinrichtung für eine abnehmbare Steckrunge für Nutzfahrzeuge für den Gütertransport**
Fixing device for a detachable stanchion for a goods transportation vehicle
Dispositif de fixation d'un rancher amovible pour un véhicule de transport de marchandises

(30) Priorität: 25.03.1988 DE 3810263
(43) Veröffentlichungstag der Anmeldung: 27.09.1989
(73) Patentinhaber: F. HESTERBERG & SÖHNE GmbH & Co. KG, D-58256 Ennepetal (DE)
(72) Erfinder: Nieland, Friedhelm, D-5805 Breckerfeld (DE)
(74) Vertreter: Kneissl, Richard, Dr.

(56) Entgegenhaltungen:
- EP-A- 0 005 120
- EP-A- 0 043 102
- DE-A- 2 938 554

## Beschreibung

Die Erfindung betrifft eine Befestigungseinrichtung für eine abnehmbare Runge für Nutzfahrzeuge für den Gütertransport.

Grundsätzlich wird bei abnehmbaren Rungen zwischen Steck- und Klapprungen unterschieden.

Steckrungen können durch Anheben aus der Steckverbindung gelöst werden, während Klapprungen nach Lösen einer Verriegelungseinrichtung abgeklappt und dann ausgehängt werden können.

Die aus der DE-C 27 28 963 bekannte Befestigungseinrichtung für eine Steckrunge besitzt einen am unteren Ende angeordneten Keil und eine am Fahrzeug befestigte Keiltasche, in die der Keil lösbar von oben einsteckbar ist. Bei dieser Befestigungseinrichtung wird die Keiltasche durch zwei V-förmig zueinander stehende Winkelprofilteile gebildet, die zur Aufnahme der Abstützflächen der Runge sattelförmig angeordnet sind. Die Runge hat an ihrem unteren Ende einen V-förmigen Ausschnitt, der die mit den Winkelprofilteilen zusammenwirkenden Abstützflächen bildet. Aus der DE-A 32 47 078 ist eine Befestigungseinrichtung für eine Steckrunge bekannt, bei welcher der Keil am Fahrzeug und die Keiltasche am unteren Ende der Runge angeordnet sind. Bei diesen Befestigungseinrichtungen besteht der Nachteil, daß durch das Eigengewicht der Runge und die Erschütterungen, denen die Runge während der Fahrt des Fahrzeugs ausgesetzt ist, der Keil sich so stark in der Keiltasche festsetzen kann, daß die Runge nur noch mit Hilfe von heftigen Hammerschlägen vom Fahrzeug gelöst werden kann. Ferner sind beide Arten von vorbekannten Befestigungseinrichtungen mit dem Nachteil behaftet, daß Keil und Keiltasche eine hohe Maßgenauigkeit erfordern, um der Runge einen sicheren und spielfreien Halt sowie eine genaue senkrechte Lage am Fahrzeug zu geben.

Aus der DE-C 29 38 554 ist eine Befestigungseinrichtung für eine Klapprunge bekannt, bei der das untere Ende der Runge als quer zur Rungenlängsachse verlaufendes zylindrisches Lagerelement ausgebildet ist, das in einer nach oben offenen, parallel zum Lagerelement verlaufenden und am Fahrzeug befestigten Lagerhalbschale aufnehmbar ist. Oberhalb des zylindrischen Lagerelements ist ein Keil vorgesehen, der in einer am Fahrzeug befestigten Keiltasche einschiebbar ist. Der Keil ist fest mit einem Keilträger verbunden, der in einem Hohlraum der Runge in Richtung der Rungenlängsachse verschiebbar gelagert ist und durch einen an der Runge vorgesehenen verschwenkbaren Handhebel bewegbar ist. Bei dieser Klapprunge wird die vertikale Abstützung der Runge vollständig von dem aus dem Lagerelement und der Lagerhalbschale gebildeten Drehlager übernommen, während der Keil in der Keiltasche lediglich die Funktion hat, die Runge vor einer selbsttätigen Ausschwenkbewegung zu sichern. Ein Festsetzen des Keils in der Keiltasche ist damit ausgeschlossen. Zum Abnehmen der Runge muß der Keil zunächst mittels des Handhebels so weit nach oben bewegt werden, bis er über der Keiltasche liegt. Dann kann die Runge um die Drehachse des Drehlagers geschwenkt und schließlich von dem Lagerelement abgehoben werden.

Die Aufgabe der Erfindung besteht darin, eine Befestigungseinrichtung für eine Steckrunge anzugeben, bei der die Demontage der Steckrunge erleichtert ist und ein spielfreier Sitz der Runge und eine genaue senkrechte Lage der Runge gewährleistet sind.

Die Aufgabe der Erfindung wird dadurch gelöst, daß bei einer aus der DE-A 29 38 554 bekannten Befestigungseinrichtung für eine Klapprunge, welche näher im Oberbegriff des vorstehenden Patentanspruchs 1 beschrieben ist, die aus dem Kennzeichen dieses Anspruchs entnehmbaren Merkmale hinzugefügt werden.

Die erfindungsgemäße Befestigungseinrichtung hat gegenüber den bekannten, ebenfalls einen Keil und eine Keiltasche aufweisenden Befestigungseinrichtungen für Steckrungen den Vorteil, daß die vertikale Abstützung der Runge vollständig von der Lagerhalbschale und dem sehr leicht von ihr zu trennenden Lagerelement übernommen wird und daß der Keil in der Keiltasche nur das seitliche Ausschwenken der Runge zu verhindern braucht. Der Keil kann sich in der Keiltasche somit nicht so festsetzen, daß die Trennung der Steckrunge von dem Fahrzeug erschwert wäre. Ferner hat die erfindungsgemäße Befestigungseinrichtung den Vorteil, daß der Keil in der Keiltasche unter der Wirkung der Feder relativ zur Runge nachrücken kann, so daß Fertigungstoleranzen sowie Maßveränderungen infolge von Verschleißerscheinungen ausgeglichen werden.

Da der Keil nur durch die Kraft der Feder und nicht durch das gesamte Gewicht der Runge in die Keiltasche gedrückt wird, wird ein Festklemmen des Keils in der Tasche verhindert. Die erfindungsgemäße Befestigungseinrichtung hat den Vorteil, daß die Steckrunge nach Niederdrücken der federnd nachgiebigen Einrichtung nur durch Hochheben, ohne die Verwendung eines Schlagwerkzeugs, wie z. B. eines Hammers, vom Fahrzeug lösbar ist. Ein wesentlicher Vorteil der erfindungsgemäßen Befestigungseinrichtung besteht darin, daß die am Fahrzeug befestigten Teile, nämlich die Lagerhalbschale und die Keiltasche ähnlich aufgebaut sind wie die entsprechenden Teile der aus der DE-A 29 38 554 bekannten Befestigungseinrichtung für eine Klapprunge, so daß es möglich ist, eine Klapprunge gegen eine Steckrunge und umgekehrt auszutauschen, ohne daß am Fahrzeug selbst Änderungen vorzunehmen sind.

Bei der aus der DE-A 29 38 554 bekannten Einrichtung wird ein Herausspringen der Klapprunge nach oben während der Fahrt des Fahrzeugs dadurch verhindert, daß der Halter auf dem die Lagerhalbschale und die Keiltasche angeordnet sind, in eine Öffnung auf der Rückseite der Runge hineinragt, deren Form der Umrißlinie des Halters entspricht. Da bei der erfindungsgemäßen Steckrunge eine Verhinderung des Herausspringens auf diese Weise unmöglich ist, ist eine federnd nachgiebige Einrichtung vorgesehen, die einem Hochheben der Runge entgegenwirkt, die aber durch Niederdrücken außer Wirkung gesetzt werden kann.

Ein Ausführungsbeispiel der Erfindung ist in den Zeichnungen dargestellt und wird im folgenden näher beschrieben. Es zeigt
Fig. 1 eine teilweise weggebrochene Vorderansicht einer erfindungsgemäßen Befestigungseinrichtung für eine Steckrunge, wobei ein Längsträger des Fahrzeugrahmens, an dem die Steckrunge befestigbar ist, sowie eine an die Steckrunge sich anschließende Bordwand des Fahrzeugs weggebrochen gezeigt sind,
Fig. 2 eine teilweise weggebrochene Rückansicht der in Fig. 1 gezeigten Befestigungseinrichtung, wobei jedoch Keiltasche und Lagerhalbschale weggelassen sind,
Fig. 3 einen Schnitt entlang der Linie III-III in Fig. 1, und
Fig. 4 einen Schnitt durch das Unterteil der Runge, wobei die Sicherung gegen das Herausspringen der Runge zu sehen ist.

Eine erfindungsgemäße Befestigungseinrichtung für eine Steckrunge für Nutzfahrzeuge für den Gütertransport, wie sie in den Zeichnungen dargestellt ist, weist am unteren Ende der Steckrunge 1 einen Keil 2 auf, der am unteren Ende eines als rechtwinklige Platte 3 ausgebildeten Keilträgers einstückig angeordnet ist. Die Platte 3 ist in einem Hohlraum 4 der Runge 1 in Richtung der Rungenlängsachse verschiebbar gelagert, wobei sie mit einer Seite mit der Innenfläche des mittleren Abschnittes 5 eines fast über die ganze Länge der Runge 1 ein Hutprofil aufweisenden Teiles 6 und mit ihren Längskanten mit den gegeneinander gerichteten Seitenflächen von zwei im Abstand voneinander angeordneten, parallelen Führungsleisten 7, die in den Ecken des Hutprofils parallel zur Rungenlängsachse angeordnet und mit dem das Hutprofil aufweisenden Teil 6 der Runge 1 fest, z.B. durch Schweißen, verbunden sind, in Gleitkontakt steht.

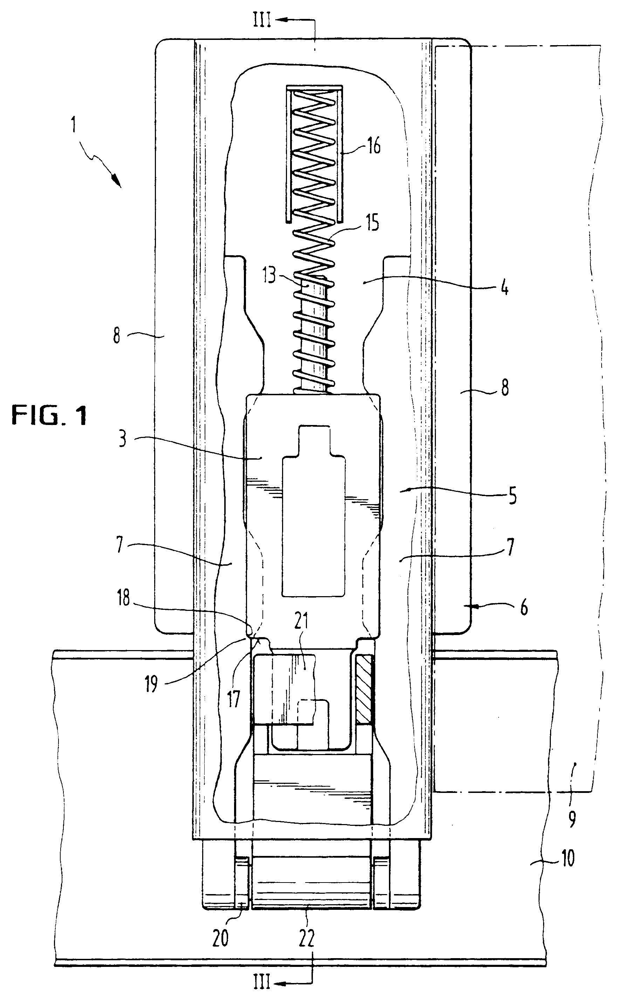

Die seitlich abstehenden Flansche 8 des Hutprofils des Teils 6 dienen als Anschlag für die zu beiden Seiten der Runge 1 angeordneten Bordwände 9, von denen in Fig. 1 nur eine gestrichelt angedeutet ist. Im Bereich seines unteren Endes des Teiles 6 sind die seitlich abstehenden Flansche 8 entfernt, so daß das Teil 6 dort nur ein U-Profil aufweist, wie in Fig. 1 zu sehen ist. Die unteren Enden der seitlich abstehenden Flansche 8 des Teiles 6 sind mit der Oberkante eines Längsträgers 10 des Fahrzeugrahmens, an dem die Runge 1 lösbar befestigt ist, bündig.

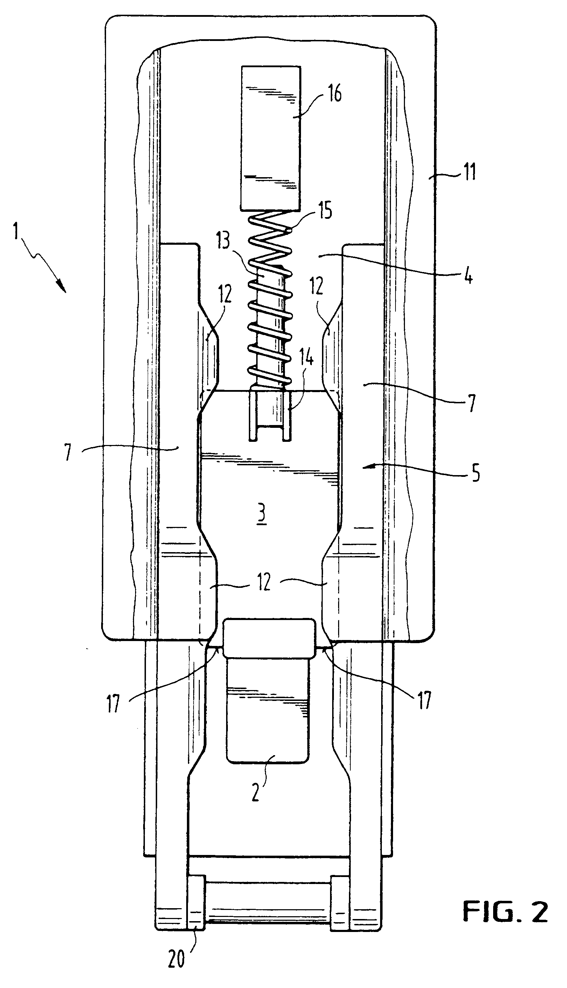

Die die Vertiefung des Hutprofils aufweisende Seite des Teiles 6 der Runge 1 ist durch ein Deckblech 11 verschlossen. Die dem Deckblech 11 zugewandte Seite der Platte 3 steht mit vier nach innen gerichteten Vorsprüngen 12 (Fig. 2) in Gleitkontakt, die an den Führungsleisten 7 ausgebildet sind und die dem Deckblech 11 zugewandte Seite der Platte 3 an deren Längsrändern teilweise abdecken. Durch die einander zugewandten Seitenflächen der Führungsleisten 7, die Innenfläche des mittleren Abschnittes 5 des Teiles 6 und die Vorsprünge 12 wird die Platte 3 bei einer Verschiebung in Richtung der Rungenlängsachse geführt.

Am oberen Ende der Platte 3 ist mittig ein zur Rungenlängsachse paralleler Zapfen 13 angeordnet, dessen Fuß an einem auf das Deckblech 11 weisenden Vorsprung 14 der Platte 3 befestigt ist. Ein Ende einer Schraubendruckfeder 15 ist über den Zapfen 13 gestülpt und kann somit Druck auf das obere Ende der Platte 3 ausüben. Das andere Ende der Schraubendruckfeder 15 ist in einer Tasche 16 angeordnet, die aus einem U-Profilstück besteht, das an einem Ende verschlossen und mit seiner Innenseite auf die Innenfläche des mittleren Abschnittes 5 des Teiles 6 weisend an dieser angeschweißt ist. Das andere Ende der Schraubendruckfeder 15 liegt an dem geschlossenen Ende des U-Profilstücks der Tasche 16 an, so daß sich die Schraubendruckfeder 15 in zusammengedrückter Form über die Tasche 16 an dem Teil 6 der Runge 1 abstützen kann. Der Zapfen 13 und die Tasche 16 verhindern auch, daß die Schrauberdruckfeder 15 beim Zusammendrücken seitlich ausknicken kann.

Am unteren Ende der Platte 3 befinden sich zwischem dem Keil 2 und den Längskanten der Platte 3 zwei nach unten weisende Anschlagflächen 17, denen zwei nach oben weisende Anschlagflächen 18 zugekehrt sind, die sich an zwei an den Führungsleisten 7 gebildeten Absätzen 19 befinden. Die Schraubendruckfader 15 drückt die Platte 3 mit dem Keil 2 nach unten, so die Anschlagflächen 17 mit den Anschlagflächen 18 zur Anlage kommen, wenn sich die Platte 3 mit dem Keil 2 in ihrer untersten Stellung, bezogen auf die Runge, befindet. Der durch die Absätze 19 gebildete Anschlag begrenzt somit die Bewegung der Platte 3 und damit des Keiles 2 nach unten.

Die unteren Enden der Führungsleisten 7 ragen aus dem unteren Ende des Teiles 6 der Runge 1 heraus und sind durch ein senkrecht zur Rungenlängsachse verlaufendes, zylindrisches Lagerelement 20 miteinander verbunden. Das Lagerelement 20 wird durch einen zylindrischen Bolzen gebildet, der mit seinen Enden an die vorstehenden Enden der Führungsleisten 7 angeschweißt ist.

Eine Keiltasche 21, die im wesentlichen aus einem U-Profilstück besteht, ist an dem Längsträger 10 des Fahrzeugs derart befestigt, daß die Innenseite des U-Profilstücks auf den Längsträger 10 weist. Die Innenfläche des mittleren Abschnittes des U-Profilstücks der Keiltasche 21 ist schräg ausgebildet, so daß sich der zwischen der Keiltasche und dem Längsträger 10 gebildete Raum nach unten verengt. Die Schräge der Innenfläche des mittleren Abschnittes des U-Profilstücks der Keiltasche 21 ist an die Schräge der einen Seite des Keiles 2 angepaßt. Die andere Seite des Keiles verläuft parallel zur Ebene der Platte 3.

Eine nach oben offene Lagerhalbschale 22 ist unterhalb der Keiltasche 21 an dem Längsträger 10 befestigt. Die Lagerhalbschale 22 setzt sich an ihrer dem Längsträger 10 zugekehrten Seite in einem plattenförmigen Teil 23 fort, der mit seinem oberen Ende an dem unteren Ende der Keiltasche 21 befestigt ist.

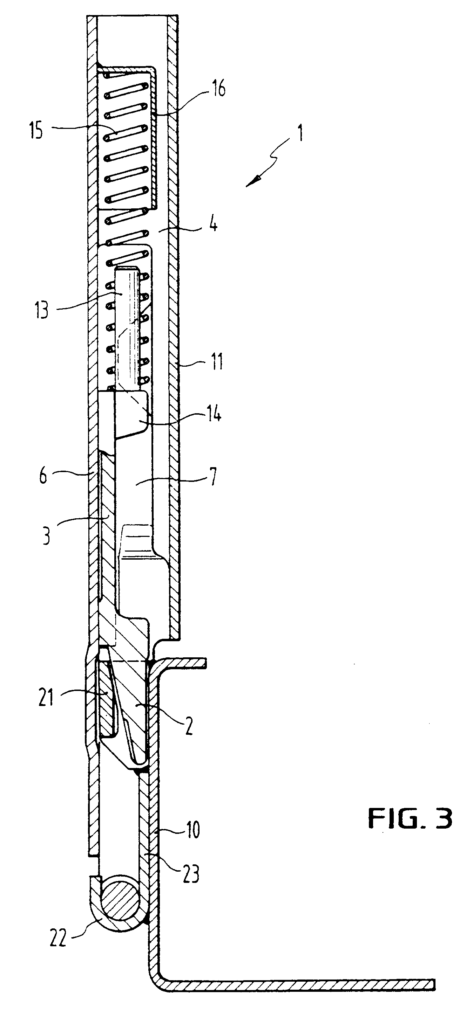

Im eingebauten Zustand, wie er aus den Figuren 1 und 3, ersichtlich ist, ist das das untere Ende der Steckrunge 1 bildende Lagerelement 20 in der nach oben offenen Lagerhalbschale aufgenommen und befindet sich der Keil 2 in der Keiltasche 21. Die Keiltasche 21 und der Keil 2 sind vorzugsweise so einander angepaßt, daß im eingebauten Zustand zumindest bei einer neuen Steckrunge die Anschlagflächen 17 und 18 einen geringen Abstand voneinander haben, so daß mit zunehmendem Verschleiß des Keiles und/oder der Keiltasche der Keil unter der Wirkung der Feder 15 tiefer in die Keiltasche eindringen kann, um einen paßgenauen, aber dennoch leicht lösbaren Sitz zu gewährleisten. Es ist ohne weiteres erkennbar, daß die vertikale Abstützung der Steckrunge vollständig von der nach oben offenen Lagerhalbschale 22 übernommen wird und daß der Keil 2 in der Keiltasche 21 lediglich verhindert, daß die Steckrunge seitlich ausschwenken kann. Der Keil 2 dient somit nur als Verriegelungselement und braucht die Steckrunge 1 nicht nach oben abstützen. Infolgedessen ist der Keil 2 immer leicht aus der Keiltasche 21 zu lösen.

Zwischen der Lagerhalbschale 22 und der Keiltasche 21 befindet sich ein in Richtung der Rungenlängsachse ununterbrochener Freiraum wie aus den Zeichnungen ersichtlich ist. Ebenso befindet sich zwischen dem Lagerelement 20 und dem Keil 2 ein in Richtung der Rungenlängsachse ununterbrochener Freiraum, wie ebenfalls aus den Zeichnungen ersichtlich ist. Die Ausdehnung der beiden Freiräume in Richtung der Rungenlängsachse ist so bemessen, daß die Runge 1 relativ zu der Lagerhalbschale 22 und der Keiltasche 21 in Richtung der Rungenlängsachse ungehindert so weit nach oben anhebbar ist, daß das Lagerelement 20 aus der Lagerhalbschale 22 und der Keil 2 aus der Keiltasche 21 entfernbar sind, während sich der Keil 2 in bezug auf die Runge in seiner untersten Stellung befindet, in welcher die Anschlagflächen 17 und 18 miteinander in Anlage sind. Die Steckrunge 1 kann somit durch Hochheben aus ihrer durch die Lagerhalbschale 22 und die Keiltasche 21 gebildeten Verankerung am Längsträger 10 des Fahrzeugrahmens abgenommen werden. Da die Lagerhalbschale 22 und das Lagerelement 20 rotationssymmetrisch ausgebildet sind, kann nach dem Hochheben der Steckrunge 1 und einer geringfügigen seitlichen Drehung der Steckrunge 1 die Steckrunge 1 wieder in die oben offene Lagerhalbschale eingehängt und dann vollständig nach unten abgeschwenkt werden. Die Steckrunge 1 kann während des Be- oder Entladens des Fahrzeugs nach unten gerichtet in der Lagerhalbschale eingehängt bleiben. Wenn die Steckrunge 1 dann wieder in ihren eingebauten Zustand zurückgebracht werden muß, braucht sie nur nach oben geschwenkt, dann leicht angehoben und schließlich abgesenkt werden. Die Demontage und die Befestigung der Steckrunge wird dadurch stark erleichtert, daß die Steckrunge nur geringfügig angehoben bzw. abgesenkt werden muß, während sie im übrigen geschwenkt werden kann, denn die Schwenkbewegung erfordert einen wesentlich geringeren Kraftaufwand als die Hebeund Senkbewegung.

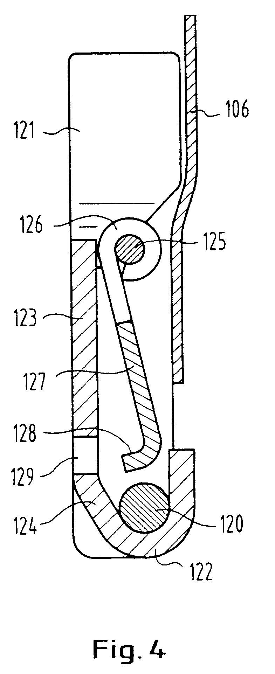

Fig. 4 zeigt das Unterteil der erfindungsgemäßen Steckrunge mit der Sicherung gegen das Herausspringen der Runge aus ihren Lagerelementen.

Das Rungenteil ist mit 106, das zylindrische Lagerelement mit 120, die Keiltasche mit 121, die Lagerhalbschale mit 122 und das plattenförmige Teil mit 123 bezeichnet. Sie entsprechen den Teilen 6, 20, 21, 22 und 23 der Fig. 1 bis 3. Die Lagerhalbschale 122 geht mit einer Kröpfung 124 in das plattenförmige Teil 123 über. Am unteren Teil der Keiltasche 121 ist eine Achse 125 befestigt, um welche ein Ende 126 einer Zunge 127 herumgeschlungen ist, die mittels einer nicht dargestellten und um die Achse 125 herumgeschlungenen Schraubenfeder in die in Fig. 4 dargestellte Lage gedrückt wird. Die Zunge 127 weist an ihrem unteren Ende eine Abwinkelung 128 auf, für welche eine Öffnung 129 im plattenförmigen Teil 123 vorgesehen ist.

Die Zunge 127 legt sich in ihrer Sperrstellung so vor das zylindrische Lagerelement 120, daß die Runge nicht aus ihrer Lagerung herausspringen kann.

Zum Abnehmen der Runge kann ein Montiereisen zwischen das untere Ende des Rungenteils 106 und das obere Ende der Lagerhalbschale 122 eingeführt werden, um die Zunge 127 zurückzudrücken. Durch Anheben des Montiereisens wird die Runge nach oben gedrückt und somit aus ihrer Verankerung gelöst.

## Patentansprüche

1. Befestigungseinrichtung für eine abnehmbare Runge für Nutzfahrzeuge für den Gütertransport mit einem am unteren Ende der Runge (1) angeordneten Keil (2), der fest mit einem Keilträger (3) verbunden ist, welcher in einem Hohlraum (4) der Runge (1) in Richtung der Rungenlängsachse verschiebbar gelagert ist, mit einer am Fahrzeug befestigten Keiltasche (21, 121), in die der Keil (2) lösbar von oben einsteckbar ist, mit einem am unteren Ende der Runge (1) angebrachten, quer zur Rungenlängsachse verlaufenden zylindrischen Lagerelement (20, 120), und mit einer nach oben offenen, unterhalb der Keiltasche (21, 121) am Fahrzeug befestigten, parallel zum Lagerelement (20, 120) verlaufenden Lagerhalbschale (22, 122), in der das zylindrische Lagerelement (20, 120) aufnehmbar ist, wobei die Keiltasche (21, 121) und die Lagerhalbschale (22, 122), mit einem plattenförmigen Teil (23, 123) verbunden sind, das seinerseits am Längsträger (10) des Fahrzeugrahmens befestigbar ist,
**dadurch gekennzeichnet,** daß zur Ausbildung als Befestigungseinrichtung für eine Steckrunge eine an der Runge (1) sich abstützende Druckfeder (15) vorgesehen ist, die den Keilträger (3) nach unten gegen einen an der Runge fest angeordneten Anschlag (19) drückt, wobei zwischen der Lagerhalbschale (22, 122) und der Keiltasche (21, 121) sowie zwischen dem Lagerelement (20, 120) und dem Keil (2) jeweils ein in Richtung der Rungenlängsachse ununterbrochener Freiraum besteht, dessen Ausdehnung in Richtung der Rungelängsachse jeweils so bemessen ist, daß die Runge (1) relativ zu der Lagerhalbschale (22, 122) und der Keiltasche (21, 121) in Richtung der Rungenlängsachse soweit nach oben bewegbar ist, daß das Lagerelement (20, 120) aus der Lagerhalbschale (22, 122) und der Keil (2) aus der Keiltasche (21) entfernbar sind, und wobei eine federnd nachgiebige Einrichtung (127), welche einem Hochheben des zylindrischen Lagerelements (120) entgegenwirkt, vorgesehen ist.

2. Befestigungseinrichtung nach Anspruch 1, dadurch gekennzeichnet, daß der Keilträger als rechtwinklige Platte (3) ausgebildet ist, an deren unteren Ende der Keil (2) angeordnet ist und deren Längskanten mit zwei im Abstand voneinander angeordneten, an der Runge (1) befestigten, parallelen Führungsleisten (7) in Gleitkontakt stehen, die nach innen gerichtete Vorsprünge (12) aufweisen, welche die eine Seite der Platte (3) teilweise abdecken, wobei die andere Seite der Platte (3) im Gleitkontakt mit der Innenfläche eines im wesentlichen ein Hutprofil aufweisenden Teiles (6) der Runge (1) steht.

3. Befestigungseinrichtung nach Anspruch 2, dadurch gekennzeichnet, daß die unteren Enden der Führungsleisten (7) nach unten aus dem im wesentlichen ein Hutprofil aufweisenden Teil (6) der Runge (1) vorstehen und durch das Lagerelement (20) miteinander verbunden sind.

4. Befestigungseinrichtung nach Anspruch 2 oder Anspruch 3, dadurch gekennzeichnet, daß am oberen Ende der Platte (3) ein nach oben weisender Zapfen (13) befestigt ist, über den ein Ende der schraubenförmige Windungen aufweisenden Druckfeder (15) gestülpt ist, deren anderes Ende in einer Tasche (16) angeordnet ist, die an der Innenfläche des ein im wesentlichen ein Hutprofil aufweisenden Teiles (6) der Runge (1) befestigt ist.

5. Befestigungseinrichtung nach einem der Ansprüche 2 bis 4, dadurch gekennzeichnet, daß der Anschlag aus zwei an den Führungsleisten (7) gebildeten Absätzen (19) besteht, die nach oben weisende Anschlagflächen (18) aufweisen, und daß die Platte (3) an ihrem unteren Ende zwischen dem Keil (2) und ihren Längskanten zwei nach unten weisende Anschlagflächen (17) aufweist, die mit den Anschlagflächen (18) der an den Führungsleisten (7) gebildeten Absätze (19) in Anlage bringbar sind.

6. Befestigungseinrichtung nach einem der Ansprüche 1 bis 5, **dadurch gekennzeichnet,** daß die federnd nachgiebige Einrichtung aus auf einer Achse (125) gelagerten Zunge (127) besteht, deren freies Ende dem zylindrischen Lagerelement (120) gegenüberliegt und die aus dieser Lage wegdrückbar ist, um das zylindrische Lagerelement (120) freizugeben.

7. Befestigunseinrichtung nach Anspruch 6, **dadurch gekennzeichnet,** daß die Zunge (127) am freien Ende eine zum plattenförmigen Teil (123) weisende Abwinkelung (128) aufweist, für welche im plattenförmigen Teil (123) eine Öffnung (129) vorgesehen ist.

## Claims

1. Fixing device for a detachable stanchion for goods transportation vehicles, comprising a wedge (2) which is arranged at the lower end of the stanchion (1) and which is fixedly connected to a wedge support (3) which is mounted displaceably in the direction of the stanchion longitudinal axis in a cavity (4) of the stanchion (1), a wedge pocket (21, 121) which is secured to the vehicle and into which the wedge (2) is insertable detachably from above, a cylindrical bearing element (20, 120) attached to the lower end of the stanchion (1) and extending transversely of the stanchion longitudinal axis, and an upwardly open bearing half shell (22, 122) which is secured beneath the wedge pocket (21, 121) to the vehicle, extends parallel to the bearing element (20, 120) and in which the cylindrical bearing element (20, 120) is receivable, the wedge pocket (21, 121) and the bearing half shell (22, 122) being connected to a plate-like member (23, 123) which in turn is secured to the longitudinal beam (10) of the vehicle frame characterized in that for configuration as fixing device for an insert stanchion a pressure spring (15) is provided which bears on the stanchion (1) and which presses the wedge support (3) downwardly against a stop (19) fixedly disposed on the stanchion, and between the bearing half shell (22, 122) and the wedge pocket (21, 121) as well as between the bearing element (20, 120) and the wedge (2) a respective cavity is present which is uninterrupted in the direction of the stanchion longitudinal axis arid the extent of which in the direction of the stanchion longitudinal axis is in each case dimensioned so that the stanchion (1) is movable upwardly in the direction of the stanchion longitudinal axis relatively to the bearing half shell (22, 122) and the wedge pocket (21, 121) to such an extent that the bearing element (20, 120) is removable from the bearing half shell (22, 122) and the wedge (2) from the wedge pocket (21), a resiliently yieldable means (127) being provided which counteracts a lifting of the cylindrical bearing element (120).

2. Fixing device according to claim 1, characterized in that the wedge support is configured as rectangular plate (3), at the lower end of which the wedge (2) is arranged and the longitudinal edges of which are in sliding contact with two spaced-apart parallel guide strips (7) which are secured to the stanchion (1) and which have inwardly directed projections (12) which partially cover the one side of the plate (3), the other side of the plate (3) being in sliding contact with the inner surface of a part (6) of the stanchion (1) having a substantially hat profile.

3. Fixing device according to claim 2, characterized in that the lower ends of the guide strips (7) project downwardly out of the part (6) of the stanchion (1) having a substantially hat profile and are connected together by the bearing element (20).

4. Fixing device according to claim 2 or 3, characterized in that to the upper end of the plate (3) an upwardly directed pin (13) is secured over which one end of the helically convoluted pressure spring (15) is pushed, the other end of which is arranged in a pocket (16) which is secured to the inner surface of the part (6) of the stanchion (1) having a substantially hat profile.

5. Fixing device according to any one of claims 2 to 4, characterized in that the stop consists of two steps (19) which are formed on the guide strips (7) and which have upwardly directed stop surfaces (18) and that the plate (3) comprises at its lower end between the wedge (2) and its longitudinal edges two downwardly directed stop faces (17) which are adapted to be brought into engagement with the stop faces (18) of the steps (19) formed on the guide strips (7).

6. Fixing device according to any one of claims 1 to 5, characterized in that the resiliently yieldable means consists of a tongue (127) which is mounted on a pin (125) and the free end of which lies opposite the cylindrical bearing element (120) and which is adapted to be pressed away out of said position to free the cylindrical bearing element (120).

7. Fixing device according to claim 6, characterized in that the tongue (127) comprises at the free end an angled portion (128) directed towards the plate-like member (123), for which an opening (129) is provided in the plate-like member (123).

## Revendications

1. Dispositif de fixation pour une ranche amovible pour véhicules utilitaires destinés au transport de marchandises, comportant un coin (2) disposé à l'extrémité inférieure de la ranche (1), qui est fixé sur un support (3) de coin, lequel support est monté dans un espace creux (4) de la ranche (1) de façon à pouvoir être déplacé en translation dans le sens longitudinal de la ranche ; un logement (21, 121) pour coin, fixé au véhicule et dans lequel le coin (2) peut être enfilé, à partir du haut, de façon démontable ; un élément de palier (20, 120) cylindrique disposé à l'extrémité inférieure de la ranche (1) et qui s'étend transversalement à l'axe longitudinal de la ranche ; et une demi-coque (22, 122) de palier, ouverte vers le haut, qui est fixée sur le véhicule en-dessous du logement (21, 121) pour coin et qui s'étend parallèlement à l'élément de palier (20, 120), demi-coquille dans laquelle l'élément cylindrique de palier (20, 120) peut être logé, le logement (21, 121) pour coin et la demi-coquille (22, 122) pour palier étant reliés à une partie (23, 123) en forme de plaque et qui peut être fixée pour sa part à un longeron (10) du cadre du véhicule, dispositif caractérisé en ce qu'en vue de réaliser un dispositif de fixation de ranche à enfiler, on prévoit un ressort de compression (15), qui s'appuie sur la ranche (1) et qui pousse le support (3) de coin vers le bas contre une butée (19) disposée de façon fixe sur la ranche, un espace libre ininterrompu existant entre la demi-coquille (22, 122) de palier et le logement (21, 121) de coin, ainsi qu'entre l'élément (20, 120) de palier et le coin (2) chaque fois dans le sens de l'axe longitudinal de la ranche, cet espace étant dimensionné de façon telle que la ranche (1) peut être déplacée vers le haut, par rapport à la demi-coquille (22, 122) de palier et au logement (21, 121) de coin, suffisamment pour que l'élément (20, 120) de palier puisse sortir de la demi-coquille (22, 122) de palier et que le coin (2) puisse être enlevé de son logement (21), en ce qu'on prévoit un dispositif (127) qui cède avec un effet de ressort et qui s'oppose au soulèvement de l'élément de palier cylindrique (120).

2. Dispositif de fixation selon la revendication 1, caractérisé en ce que le support de coin est conformé en une plaque en équerre (3) à l'extrémité inférieure de laquelle est fixé le coin (2) et dont les bords longitudinaux sont en contact glissant avec deux glissières parallèles, fixées sur la ranche en ménageant un écart entre elles, ces glissières présentant des saillies (12) orientées vers l'intérieur et qui recouvrent partiellement un côté de la plaque (3), l'autre côté de la plaque (3) étant en contact glissant avec la surface intérieure d'une partie (6) de la ranche (1) présentant sensiblement un profil de chape.

3. Dispositif de fixation selon la revendication 2, caractérisé en ce que les extrémités inférieures des glissières (7) dépassent, en direction du bas, de la partie (6) de la ranche (1) présentant essentiellement un profil de chape et en ce qu'elles sont reliées l'une à l'autre par l'élément de palier (20).

4. Dispositif de fixation selon la revendication 2 ou la revendication 3, caractérisé en ce qu'à l'extrémité supérieure de la plaque (3) est fixé un tourillon (13) orienté vers le haut, sur lequel est enfilée une extrémité d'un ressort de compression (15) présentant des enroulements hélicoïdaux et dont l'autre extrémité est disposée dans un logement (16), qui est fixé sur la surface intérieure de la pièce (6) de la ranche (1) présentant sensiblement un profil de chape.

5. Dispositif de fixation selon l'une des revendications 2 à 4, caractérisé en ce que la butée est constituée par deux épaulements (19) réalisés sur les glissières (7), lesquelles présentent des surfaces (18) de butée orientées vers le haut, et en ce que la plaque (3) présente à son extrémité inférieure, entre le coin (2) et ses bords longitudinaux, deux surfaces de butée (17) orientées vers le bas et qui peuvent être amenées en appui sur les surfaces de butée (18) des épaulements (19) réalisés sur les glissières (7).

6. Dispositif de fixation selon l'une des revendications 1 à 5, caractérisé en ce que le dispositif qui cède avec un effet de ressort est constitué par une languette (127) montée sur un axe (125), dont l'extrémité libre est située en face de l'élément de palier cylindrique (120) et qui peut être poussée hors de cette position afin de libérer l'élément de palier cylindrique (120).

7. Elément de fixation selon la revendication 6, caractérisé en ce que la languette (127) présente à son extrémité libre une partie coudée (128) qui est orientée en direction de la pièce (123) en forme de plaque, partie (128) pour laquelle est prévue une ouverture (129) dans la pièce (123) en forme de plaque.
